# EUROPÄISCHE PATENTSCHRIFT

(11) **EP 3 623 773 B1**
(45) Veröffentlichungstag und Bekanntmachung des Hinweises auf die Patenterteilung: **11.10.2023**
(21) Anmeldenummer: 19191765.7
(22) Anmeldetag: 14.08.2019
(51) Int. Cl.: G01F 1/66, G01F 1/661

(54) **DURCHSTRÖMBARER ROHREINSATZ FÜR DIE OPTISCHE STRÖMUNGSMESSUNG**
FLOW TUBE INSERT FOR OPTICAL FLOW MEASUREMENT
INSERT DE TUYAU D'ÉCOULEMENT POUR LA MESURE OPTIQUE DU DÉBIT

(30) Priorität: 12.09.2018 DE 102018122216
(43) Veröffentlichungstag der Anmeldung: 18.03.2020
(73) Patentinhaber: SIKA Dr.Siebert & Kühn GmbH & Co. KG., 34260 Kaufungen (DE)
(72) Erfinder: WILKE, Bastian, 34128 Kassel (DE); KLEINWÄCHTER, Andre, 18198 Stäbelow (DE); SCHÄPER, Martin, 18057 Rostock (DE); DAMASCHKE, Nils, 18059 Papendorf (DE)
(74) Vertreter: Walther Bayer Faber Patentanwälte PartGmbB

(56) Entgegenhaltungen:
- DE-B3-102006 039 489
- DE-B3-102007 040 970
- DE-B3-102014 205 882
- DE-B3-102015 001 826

## Beschreibung

Die Erfindung betrifft einen Rohreinsatz für die optische Strömungsmesstechnik, mit einem Fluidrohr, das einen durchströmbaren Strömungsinnenraum aufweist, wobei im Fluidrohr wenigstens ein für eine Messoptik transparentes Fensterelement eingebracht ist, wobei das Fluidrohr wenigstens im Bereich des Fensterelementes mit einem druckfesten Gehäuse umschlossen ist, durch das das Fensterelement in einem Gehäuseinnenraum aufgenommen ist und wobei der Gehäuseinnenraum mit dem Strömungsinnenraum wenigstens mittelbar fluidisch wechselwirkend und/oder fluidisch verbunden ist, wobei das Fensterelement mittels eines zylindrischen Rohrabschnittes aus einem transparenten Werkstoff gebildet ist, und wobei der zylindrische Rohrabschnitt an wenigstens einer Endseite mittels eines Anschlusselementes an das Fluidrohr oder die Fluidrohre angeschlossen ist.

### STAND DER TECHNIK

Die CA 2 439 242 A1 offenbart einen Rohreinsatz für die optische Strömungsmesstechnik mit einem Fluidrohr, das einen durchströmbaren Strömungsinnenraum aufweist, wobei im Fluidrohr wenigstens ein für eine Messoptik transparentes Fensterelement eingebracht ist. Das Fensterelement bildet ein für die verwendete Lichtquelle transparentes Fenster und ist im Fluidrohr lokal begrenzt eingesetzt. Dabei ist das Fenster mit einer Krümmung ausgebildet, sodass das Fluidrohr ohne Unterbrechung und ohne Bildung von Strömungs-Störkörpern in der Wandung des Rohrkörpers eingesetzt ist. Durch das Fenster hindurch kann die entsprechende Beobachtung für die optische Strömungsmesstechnik erfolgen, und als Lichtquelle findet ein Laser Anwendung, sodass das Fensterelement ein Material aufweist, das für die Laserwellenlänge transparent ist. Das Fluidrohr des Rohreinsatzes kann dabei von der Laserstrahlung durchstrahlt werden, indem auf diametral gegenüberliegenden Seiten jeweils ein eigenes Fensterelement eingesetzt wurde.

Aus der DE 10 2009 005 800 A1 ist eine weitere Ausführungsform eines Rohreinsatzes für die optische Strömungsmesstechnik bekannt, und an ein Fluidrohr ist vertikal abragend ein Messrohr angeordnet, und im Übergangsbereich zwischen dem Fluidrohr und dem Messrohr befindet sich ein Einschubfenster. Das Einschubfenster ist in einem Aufbohrbereich eingesetzt, und es ergibt sich für die Innenkontur des Fluidrohres im Bereich des Fensterelementes eine Unterbrechung der zylindrischen Grundform. Hinzu kommt, dass für große Fluiddrücke im Fluidrohr gewöhnliche Fensterelemente sehr aufwendig ausgeführt werden müssen, da auch das Fensterelement mit dem vollen Fluiddruck beaufschlagt wird und folglich im Fluidrohr entsprechend aufwendig aufgenommen werden muss. Über eine längere Gebrauchsdauer des Rohreinsatzes ergibt sich dadurch die Gefahr von Leckagen, die es stets zu vermeiden gilt.

Die DE 10 2015 001 826 B3 offenbart einen gattungsbildenden Rohreinsatz für die optische Strömungsmessung mit einem Fluidrohr, wobei ein Entlüftungskanal im Fluidrohr vorgesehen ist, der von einem Totraum zum Strömungskanal führt und so angeordnet ist, dass ein Durchströmen des Strömungskanals mit einem Fluid einen Unterdruck im Entlüftungskanal erzeugt, wobei der Totraum so mit dem Strömungskanal verbunden ist, dass dieser unter Druck einen Fluidstrom aus dem Strömungskanal in den Totraum bewirkt. Der Rohreinsatz ist jedoch nicht zur Anbringung einer Messoptik geeignet, da es an einem transparenten Fensterelement fehlt, und es ist auch kein das Fensterelement umgebender Raum vorhanden, der den gleichen Fluiddruck aufweisen könnte, wie der Strömungsraum.

Aus der DE 10 2014 205 882 B3 ist ein Rohreinsatz für die optische Strömungsmessung mit einem Fluidrohr bekannt, wobei ein das Fluidrohr umgebender Gehäuseinnenraum nicht vorgesehen ist, um das Fluidrohr mechanisch lastfrei fluidisch zu beaufschlagen.

Die DE 10 2006 039 489 B3 offenbart einen Rohreinsatz für eine optische Strömungsmessung mit einem Fluidrohr, wobei das Fluidrohr nachteilhafterweise mechanisch hoch belastet ist, wenn das das Fluidrohr durchströmende Fluid selbst einen hohen Druck aufweist.

Schließlich zeigt die DE 10 2007 040 970 B3 einen Rohreinsatz für die optische Strömungsmessung mit einem Fluidrohr, das einen durchströmbaren Strömungsinnenraum aufweist, wobei im Fluidrohr wenigstens ein für eine Messoptik transparentes Fensterelement eingebracht ist, wobei das Fluidrohr wenigstens im Bereich des Fensterelementes mit einem druckfesten Gehäuse umschlossen ist, durch das das Fensterelement in einem Gehäuseinnenraum aufgenommen ist, und wobei der Gehäuseinnenraum mit dem Strömungsinnenraum wenigstens mittelbar fluidisch wechselwirkend und/oder fluidisch verbunden ist, wobei das Fensterelement mittels eines zylindrischen Rohrabschnittes aus einem transparenten Werkstoff gebildet ist, und wobei der zylindrische Rohrabschnitt an wenigstens einer Endseite mittels eines Anschlusselementes an das Fluidrohr oder die Fluidrohre angeschlossen ist. Nachteilhafterweise sind Bypass-Strömungskanäle aus dem Fluidrohr vorgesehen, um den Gehäuseinnenraum mit Fluiddruck zu beaufschlagen, und um das Fensterelement zu entlasten. Nachteilhafterweise stören die Bypass-Öffnungen aus der Innenwandung des Fluidrohres das Strömungsverhalten des Fluids durch das Fluidrohr.

### OFFENBARUNG DER ERFINDUNG

Aufgabe der Erfindung ist die Weiterbildung eines Rohreinsatzes für die optische Strömungsmesstechnik mit einem Fluidrohr, in dem ein Fensterelement eingebracht ist, wobei der Rohreinsatz auf einfache Weise ausgeführt werden soll und wobei der Rohreinsatz so ausgeführt werden soll, dass durch das Fluidrohr hohe Drücke eines Fluids hindurchgeführt werden können.

Diese Aufgabe wird ausgehend von einem Rohreinsatz gemäß dem Oberbegriff des Anspruches 1 mit den kennzeichnenden Merkmalen gelöst. Vorteilhafte Weiterbildungen der Erfindung sind in den anhängigen Ansprüchen angegeben.

Die Erfindung schließt die technische ein, dass das Anschlusselement fluiddurchlässig ist.

Erfindungsgemäß ist also der zylindrische Rohrabschnitt an wenigstens einer Endseite mittels eines Anschlusselementes an das Fluidrohr oder an die Fluidrohre angeschlossen, wobei das Anschlusselement fluiddurchlässig ist. Beispielsweise kann hierfür das Anschlusselement aus einem porösen Material und/oder aus einem Sinterwerkstoff ausgebildet sein, durch das das Fluid hindurchtreten kann. Im Sinne der vorliegenden Erfindung ergibt sich damit eine wenigstens mittelbare fluidische Verbindung zwischen dem Strömungsinnenraum und dem Gehäuseinnenraum, wobei auch beispielsweise eine Anzahl von Mikrobohrungen oder dergleichen möglich wären, die die Strömung im Fluidrohr und auch im zylindrischen Rohrabschnitt nicht beeinflussen. Die wenigstens mittelbare fluidische Verbindung beschreibt dabei jede Form einer fluidischen Verbindung, die einen Druckausgleich zwischen dem Strömungsinnenraum und dem Gehäuseinnenraum ermöglicht. Hierunter fallen beispielsweise auch Membranverbindungen oder dergleichen.

Insbesondere kann vorgesehen werden, dass zwischen dem Strömungsinnenraum und dem Gehäuseinnenraum eine elastische Membran ausgebildet ist, sodass sich mit einer Verformung der Membran ein Druckausgleich zwischen dem Strömungsinnenraum und dem Gehäuseinnenraum einstellt. Der Gehäuseinnenraum muss folglich nicht zwingend einen Fluidaustausch mit dem Strömungsinnenraum aufweisen, sodass die Innenräume fluidisch wechselwirkend mittels der Membran miteinander verbunden sind. Vorteilhafterweise ist die elastische Membran mittels des Anschlusselementes und/oder als Teil des Anschlusselementes ausgebildet. Die Membran kann beispielsweise aus einem Kunststoff, insbesondere aus einem Gummimaterial, aus einem Kautschukmaterial oder aus einem sonstigen Elastomer ausgebildet sein oder diese Werkstoffe wenigstens umfassen. Die Wechselwirkung zwischen dem Strömungsinnenraum und dem Gehäuseinnenraum entsteht folglich dadurch, dass sich die Membran bei einer Druckdifferenz auf den beiden Membranseiten zum Beispiel wölben kann und die Fluide in den Räumen damit eine Wechselwirkung miteinander ausüben.

Durch die wenigstens mittelbare fluidische Verbindung des Gehäuseinnenraums mit dem Strömungsinnenraum herrscht sowohl im Gehäuseinnenraum als auch im Strömungsinnenraum der gleiche Fluiddruck. Folglich werden auf das Fensterelement durch das Fluid keine Kräfte mehr ausgeübt, und das Fensterelement kann auf einfache Weise konstruktiv ausgeführt werden, insbesondere ohne großen fluidischen Drücken standzuhalten. Insbesondere kann das Fensterelement so ausgeführt werden, dass im Fluidrohr keine wesentliche Abweichung von einer Zylindermantelfläche entsteht, um in der Fluidströmung möglichst keine Störung zu verursachen.

Zur Ausführung des Fensterelementes bestehen mehrere Möglichkeiten, beispielsweise kann dieses als ein lokal begrenzter Einsatz in der Wandung des Fluidrohres ausgeführt sein, ohne dass die Aufnahme des Fensterelementes im Fluidrohr großen Drücken standhalten müsste. Eine vorteilhafte Ausführungsform des Fensterelementes kann erreicht werden mittels eines zylindrischen Rohrabschnittes, das aus einem transparenten Werkstoff gebildet ist. Der zylindrische Rohrabschnitt kann insbesondere etwa die gleichen Außen- und Innendurchmesser aufweisen wie das Fluidrohr selbst, und der Rohrabschnitt bildet lediglich einen Streckenabschnitt in Längserstreckung des Fluidrohres. Dieser zylindrische Rohrabschnitt kann vollumfänglich transparent ausgeführt sein, wobei an den zylindrischen Rohrabschnitt keine Anforderungen an eine besondere Festigkeit gestellt werden müssen. Beispielsweise kann der Werkstoff zur Bildung des zylindrischen Rohrabschnittes gewählt werden aus einem Glaskörper oder aus einer Glaskeramik.

Gemäß einer vorteilhaften Ausführungsform ist der zylindrische Rohrabschnitt in einem Bereich einer axialen Unterbrechung des Fluidrohres eingebracht und bildet einen zylindrischen Innenraum aus, der sich unterbrechungsfrei und mit gleichem Durchmesser an den Strömungsinnenraum des Fluidrohres anschließt. Insbesondere schließen sich zwei Fluidrohre an den Endseiten des zylindrischen Rohrabschnittes an, wobei beide Fluidrohre und der zylindrische Rohrabschnitt eine identische Innenkontur, insbesondere Innendurchmesser aufweisen.

Um die optische Strömungsmessung ausführen zu können, ist vorgesehen, dass auch das Gehäuse wenigstens ein Fensterelement aus einem transparenten Werkstoff aufweist, beispielsweise Glas oder eine Glaskeramik. Dabei kann das Fensterelement so ausgeführt sein, dass es dem Innendruck des Fluids im Gehäuseinnenraum problemlos standhalten kann, da das Fensterelement im Gehäuse nicht an die Innenkontur des Gehäuses angepasst werden muss, beispielsweise wie die Innenkontur des Fluidrohres. Das Fensterelement kann beispielsweise aus einem plan ausgeführten Flächenkörper gebildet und in das Gehäuse eingefasst sein. Typische Fensterelemente für Drucksysteme sind in einem mehrfach verschraubten Flansch aufgenommen, und die Fensterelemente sind beispielsweise kreisrund ausgeführt und zwischen zwei Flanschringen druckdicht eingefasst.

Mit noch weiterem Vorteil ist das Gehäuse aus einem metallischen Werkstoff ausgebildet, wobei das Fluidrohr an beiden gegenüberliegenden Seiten des Gehäuses in den Gehäuseinnenraum hinein erstreckt. Die Verbindung zwischen den seitlichen Planflächen des beispielsweise zylindrischen oder würfelförmigen Gehäuses und dem Fluidrohr können Schweißverbindungen sein, wobei alternativ die Fluidrohre auch mit dem Gehäuse verschraubt sein können.

Der Rohreinsatz kommt so zur Anwendung, dass der Gehäuseinnenraum mit demselben Fluid gefüllt ist wie das Fluid, das durch den Strömungsinnenraum geführt wird. Dadurch können sich insbesondere optische Vorteile ergeben, wenn für die optische Strömungsmessung nur eine Sorte eines Fluids sowohl im Fluidrohr als auch im Gehäuseinnenraum vorhanden ist. Der Gehäuseinnenraum kann dabei mit dem Fluid, das durch den Rohreinsatz hindurchgeführt werden soll, vorbefüllt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine erste schematisierte Ansicht eines Rohreinsatzes im Vollquerschnitt und
- Figur 2: eine zweite schematische Ansicht eines Rohreinsatzes mit einem Teilquerschnitt und in einer in Bezug auf Figur 1 um 90° um eine Rohrlängsachse gedrehten Position.

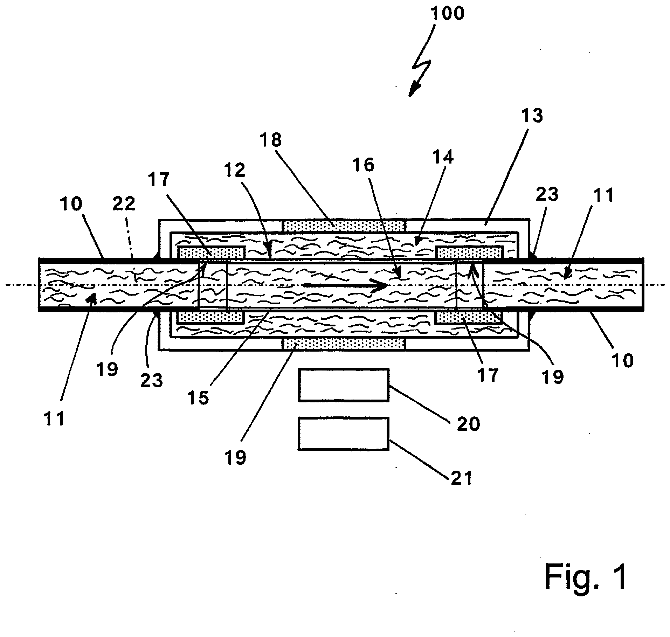

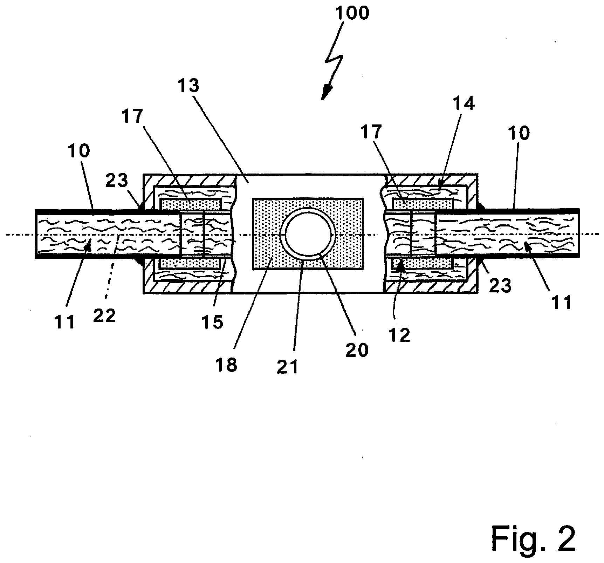

Die Figuren 1 und 2 zeigen jeweils einen Rohreinsatz 100, und in Figur 1 ist der Rohreinsatz 100 in einer im Wesentlichen vollständigen Querschnittsansicht gezeigt, und in Figur 2 ist der Rohreinsatz 100 um eine Längsachse um 90° gedreht und in einem Teilquerschnitt dargestellt.

Der Rohreinsatz 100 ist im Verlauf eines Fluidrohres 10 eingesetzt und wird mit einem Fluid durchströmt, das von einem Fluidrohr 10 an den Rohreinsatz 100 herangeführt und von einem Fluidrohr 10 aus dem Rohreinsatz 100 wieder herausgeführt wird.

Die optische Strömungsmessung beruht auf der Einstrahlung von Strahlung und der anschließenden Sensierung der Strahlung. Hierzu muss der Rohreinsatz 100 ein Fenster bilden, durch das die Strahlung in das Fluid eingestrahlt werden kann. Hierzu und zur Sensierung dienen eine Optik 20 und ein Sensor 21, die lediglich schematisch in Anordnung vor dem Rohreinsatz 100 dargestellt sind.

Das Fluidrohr 10 ist unterbrochen und in der Unterbrechung ist ein Fensterelement 12 eingesetzt, das als zylindrischer Rohrabschnitt 15 ausgebildet ist. Das unterteilte Fluidrohr 10 und der zylindrische Rohrabschnitt 15 erstrecken sich in einer gemeinsamen Längsachse 22.

Der zylindrische Rohrabschnitt 15 ist mit Bezug auf den Durchmesser, insbesondere den Innendurchmesser, so ausgebildet, dass der Strömungsinnenraum 11 des Fluidrohres 10 unterbrechungsfrei weitergeführt wird über den zylindrischen Rohrabschnitt 15. Dadurch wird in der Strömung des Fluids im Strömungsinnenraum 11 des Fluidrohres 12 auch beim Durchströmen des zylindrischen Rohrabschnittes 15 über den zylindrischen Innenraum 16 keine Strömungsunterbrechung erzeugt.

Das als zylindrischer Rohrabschnitt 15 ausgebildete Fensterelement 12 wird mittels Anschlusselementen 17 zwischen den Enden des Fluidrohres 10 aufgenommen. Die Anschlusselemente 17 bilden beispielsweise Manschetten, die die Fluidrohre 10 und die Außenseiten des zylindrischen Rohrabschnittes 15 vollumfänglich umschließen.

Die Anschlusselemente 17 weisen ein poröses, insbesondere in geringem Maße fluid-durchlässiges Material auf, beispielsweise ein poröses Material und insbesondere ein Sintermaterial, beispielsweise Sintermetall.

Weiterhin ist das Fensterelement 12 mit den Anschlusselementen 17 mittels eines Gehäuses 13 vollständig umschlossen, und das Gehäuse 13 ist über Anschlussstellen 23 druckdicht mit den Fluidrohren 10 verbunden, beispielsweise durch Schweißverbindungen oder Schraubverbindungen.

Aufgrund der Durchlässigkeit der Anschlusselemente 17 kann das Fluid aus dem Strömungsinnenraum 11 der Fluidrohre 10 beziehungsweise aus dem zylindrischen Innenraum 16 des Rohrabschnittes 15 durch das Material des Anschlusselementes 17 hindurch in einen Gehäuseinnenraum 14 gelangen, der vom Gehäuse 13 umschlossen ist. Wird der Rohreinsatz 100 für höhere oder sehr hohe Fluiddrücke verwendet, so bildet sich im Gehäuseinnenraum 14 der gleiche Fluiddruck aus wie auch in den Fluidrohren 10 und im zylindrischen Rohrabschnitt 15. Da der Gehäuseinnenraum 14 den zylindrischen Rohrabschnitt 15 jedoch außenumfänglich umschließt, bewirkt die Druckbeaufschlagung des Fluids im zylindrischen Innenraum 16 des Rohrabschnittes 15 keine mechanische Druckbelastung auf den Rohrabschnitt 15, da sowohl innenseitig als auch außenseitig des Rohrabschnittes 15 der gleiche Fluiddruck vorherrscht. Um die optische Strömungsmessung auszuführen, ist das Fensterelement 12 gemäß dem Ausführungsbeispiel ein zylindrischer Rohrabschnitt 15 transparent ausgeführt, sodass wenigstens mit einer Messwellenlänge durch den Rohrabschnitt 15 hindurch das Fluid betrachtet werden kann. Im Gehäuse 13 befindet sich ein Fensterelement 18, das einfacher ausgeführt sein kann als wenn im Fluidrohr 10 ein Fensterelement 12 eingebracht wäre, das entsprechenden Fluiddrücken standhalten müsste. Beispielsweise kann das Fensterelement 18 im Gehäuse 13 als plan ausgeführtes Fensterelement ausgebildet sein und die Innenkontur des Gehäuses 13 kann durch das Fensterelement 18 unterbrochen sein, beispielsweise abweichend von einem zylindrischen Gehäuseinnenraum 14. Aufgrund des zylindrischen Rohrabschnittes 15 ergibt sich kein Strömungsquerschnittsabschnitt innerhalb des Fluidrohres 10 und des Rohrabschnittes 15, der vom Durchmesser und von der Kreisquerschnittsform des Fluidrohres 10 abweicht. Für die Anordnung eines druckbeaufschlagbaren Fensterelementes 18 im Gehäuse 13 ist jedoch die Störung der Innenkontur des Gehäuseinnenraums 14 irrelevant für die Strömung des Fluids durch das Fluidrohr 10, da der Gehäuseinnenraum 14 nicht durchströmt wird und lediglich mit dem gleichen Druck beaufschlagt ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Die Erfindung ist in den beigefügten Ansprüchen 1-9 spezifiziert.

### Bezugszeichenliste:

- 100: Rohreinsatz

- 10: Fluidrohr
- 11: Strömungsinnenraum
- 12: Fensterelement
- 13: Gehäuse
- 14: Gehäuseinnenraum
- 15: zylindrischer Rohrabschnitt
- 16: zylindrischer Innenraum
- 17: Anschlusselement
- 18: Fensterelement
- 19: offener Bereich
- 20: Optik
- 21: Sensor
- 22: Längsachse
- 23: Anschlussstelle

## Patentansprüche

1. Rohreinsatz (100) für die optische Strömungsmessung mit einem Fluidrohr (10), das einen durchströmbaren Strömungsinnenraum (11) aufweist, wobei im Fluidrohr (10) wenigstens ein für eine Messoptik transparentes Fensterelement (12) eingebracht ist,
wobei das Fluidrohr (10) wenigstens im Bereich des Fensterelementes (12) mit einem druckfesten Gehäuse (13) umschlossen ist, durch das das Fensterelement (12) in einem Gehäuseinnenraum (14) aufgenommen ist und wobei der Gehäuseinnenraum (14) mit dem Strömungsinnenraum (11) wenigstens mittelbar fluidisch wechselwirkend und/oder fluidisch verbunden ist,
wobei das Fensterelement (12) mittels eines zylindrischen Rohrabschnittes (15) aus einem transparenten Werkstoff gebildet ist, und wobei der zylindrische Rohrabschnitt (15) an wenigstens einer Endseite mittels eines Anschlusselementes (17) an das Fluidrohr (10) oder die Fluidrohre angeschlossen ist,
**dadurch gekennzeichnet,**
**dass** das Anschlusselement (17) fluiddurchlässig ist.

2. Rohreinsatz (100) nach Anspruch 1,
**dadurch gekennzeichnet,**
**dass** der zylindrische Rohrabschnitt (15) aus einem Glaskörper oder aus einem Glaskeramikkörper gebildet ist.

3. Rohreinsatz (100) nach Anspruch 1 oder 2,
**dadurch gekennzeichnet,**
**dass** der zylindrische Rohrabschnitt (15) in einem Bereich einer axialen Unterbrechung des Fluidrohres (10) eingebracht ist und einen zylindrischen Innenraum (16) bildet, der sich unterbrechungsfrei und mit gleichem Durchmesser an den Strömungsinnenraum (11) des Fluidrohres (10) anschließt.

4. Rohreinsatz (100) nach Anspruch 1,
**dadurch gekennzeichnet,**
**dass** das Anschlusselement (17) aus einem porösen Material und/oder aus einem Sinterwerkstoff ausgebildet ist, durch das das Fluid hindurchtreten kann.

5. Rohreinsatz (100) nach einem der vorgenannten Ansprüche,
**dadurch gekennzeichnet,**
**dass** zwischen dem Strömungsinnenraum (11) und dem Gehäuseinnenraum (14) eine elastische Membran ausgebildet ist, sodass sich mit einer Verformung der Membran ein Druckausgleich zwischen dem Strömungsinnenraum (11) und dem Gehäuseinnenraum (14) einstellt.

6. Rohreinsatz (100) nach Anspruch 5,
**dadurch gekennzeichnet,**
**dass** die elastische Membran mittels des Anschlusselementes (17) und/oder als Teil des Anschlusselementes (17) gebildet ist.

7. Rohreinsatz (100) nach einem der vorgenannten Ansprüche,
**dadurch gekennzeichnet,**
**dass** das Gehäuse (13) wenigstens ein Fensterelement (18) aus einem transparenten Werkstoff aufweist.

8. Rohreinsatz (100) nach Anspruch 6,
**dadurch gekennzeichnet,**
**dass** das Fensterelement (18) aus einem plan ausgeführten Flächenkörper gebildet und in das Gehäuse (13) eingefasst ist.

9. Rohreinsatz (100) nach einem der vorgenannten Ansprüche,
**dadurch gekennzeichnet,**
**dass** das Gehäuse (13) aus einem metallischen Werkstoff ausgebildet ist und wobei das Fluidrohr (10) an sich gegenüberliegenden Endflächen des Gehäuses (13) in den Gehäuseinnenraum (14) hineingeführt ist.

## Claims

1. A pipe adapter (100) for optical flow measurement comprising a fluid pipe (10) that has a flow-through inner flow space (11), wherein at least one window element (12) transparent to a measurement optics is introduced in the fluid pipe (10),
wherein
the fluid pipe (10) is surrounded, at least in the region of the window element (12), by a pressure-resistant housing (13) by which the window element (12) is mounted in an inner housing space (14), and with the inner housing space (14) being at least indirectly fluidically interactive and/or in fluidic communication with the inner flow space (11);
wherein the window element (12) is formed by means of a cylindrical pipe section (15) composed of a transparent material;
and wherein the cylindrical pipe section (15) is connected at at least one end side to the fluid pipe (10) or to the fluid pipes by means of a connector element (17),
**characterized in that**
the connector element (17) is fluid-permeable.

2. A pipe adapter (100) in accordance with claim 1,
**characterized in that**
the cylindrical pipe section (15) is formed from a glass element or from a glass ceramic element.

3. A pipe adapter (100) in accordance with claim 1 or claim 2,
**characterized in that**
the cylindrical pipe section (15) is introduced in a region of an axial interruption of the fluid pipe (10) and forms a cylindrical inner space (16) that adjoins the inner flow space (11) of the fluid pipe (10) without interruption and with the same diameter.

4. A pipe adapter (100) in accordance with claim 1,
**characterized in that**
the connector element (17) is formed from a porous material and/or from a sintered material through which the fluid can pass.

5. A pipe adapter (100) in accordance with one of the preceding claims,
**characterized in that**
an elastic membrane is formed between the inner flow space (11) and the inner housing space (14) so that a pressure equalization is adopted between the inner flow space (11) and the inner housing space (14) on a deformation of the membrane.

6. A pipe adapter (100) in accordance with claim 5,
**characterized in that**
the elastic membrane is formed by means of the connector element (17) and/or as a part of the connector element (17).

7. A pipe adapter (100) in accordance with one of the preceding claims,
**characterized in that**
the housing (13) has at least one window element (18) composed of a transparent material.

8. A pipe adapter (100) in accordance with claim 6,
**characterized in that**
the window element (18) is formed from a planar surface member and is encompassed in the housing (13).

9. A pipe adapter (100) in accordance with one of the preceding claims, **characterized in that**
the housing (13) is formed from a metal material, and with the fluid pipe (10) being conducted into the inner housing space (14) at oppositely disposed end surfaces of the housing (13).

## Revendications

1. Insert de tuyau (100) destiné à la mesure optique du débit comportant un tuyau à fluides (10), qui présente un espace intérieur d'écoulement (1) apte à être traversé, au moins un élément de fenêtre (10) transparent pour une optique de mesure étant ménagé dans le tuyau à fluides (10), le tuyau à fluides (10) étant entouré, au moins dans la zone de l'élément de fenêtre (12), par un boîtier (13) résistant à la pression, à travers lequel l'élément de fenêtre (12) est reçu dans un espace intérieur de boîtier (14) et l'espace intérieur de boîtier (14) se trouvant au moins indirectement en liaison par interaction fluidique et/ou en liaison fluidique avec l'espace intérieur d'écoulement (11),
l'élément de fenêtre (12) étant formé au moyen d'une partie de tuyau (15) cylindrique en un matériau transparent et la partie de tuyau (15) cylindrique étant raccordée au tuyau à fluides (10) ou aux tuyaux à fluides par au moins un côté d'extrémité au moyen d'un élément de raccordement (17),
**caractérisé en ce que**
l'élément de raccordement (17) est perméable aux fluides.

2. Insert de tuyau (100) selon la revendication 1,
**caractérisé en ce que**
la partie de tuyau (15) cylindrique est constituée d'un corps vitré ou d'un corps vitrocéramique.

3. Insert de tuyau (100) selon la revendication 1 ou 2,
**caractérisé en ce que**
la partie de tuyau (15) cylindrique est placée dans une zone d'interruption axiale du tuyau à fluides (10) et forme un espace intérieur (16) cylindrique qui se trouve dans le prolongement, sans interruption et avec un diamètre identique, de l'espace intérieur d'écoulement (11) du tuyau à fluides (10).

4. Insert de tuyau (100) selon la revendication 1,
**caractérisé en ce que**
l'élément de raccordement (17) est réalisé en un matériau poreux et/ou en un matériau fritté, à travers lequel le fluide peut passer.

5. Insert de tuyau (100) selon l'une des revendications précédentes, **caractérisé en ce que**
une membrane élastique est formée entre l'espace intérieur d'écoulement (11) et l'espace intérieur de boîtier (14), de telle sorte qu'une déformation de la membrane entraîne une compensation de pression entre l'espace intérieur d'écoulement (11) et l'espace intérieur de boîtier (14).

6. Insert de tuyau (100) selon la revendication 5,
**caractérisé en ce que**
la membrane élastique est formée au moyen de l'élément de raccordement (17) et/ou comme partie de l'élément de raccordement (17).

7. Insert de tuyau (100) selon l'une des revendications précédentes, **caractérisé en ce que**
le boîtier (13) présente au moins un élément de fenêtre (18) constitué d'un matériau transparent.

8. Insert de tuyau (100) selon la revendication 6,
**caractérisé en ce que**
l'élément de fenêtre (18) est constitué d'un corps plat réalisé plan et est enchâssé dans le boîtier (13).

9. Insert de tuyau (100) selon l'une des revendications précédentes, **caractérisé en ce que**
le boîtier (13) est réalisé en un matériau métallique et dans lequel le tuyau à fluides (10) est introduit dans l'espace intérieur de boîtier (14) par des faces d'extrémité opposées du boîtier (13).
